# EUROPÄISCHE PATENTSCHRIFT

(11) **EP 0 991 871 B1**
(45) Veröffentlichungstag und Bekanntmachung des Hinweises auf die Patenterteilung: **29.09.2004**
(21) Anmeldenummer: 99915438.8
(22) Anmeldetag: 28.04.1999
(51) Int. Cl.: F16D 1/072, F16D 1/08

(54) **EINRICHTUNG MIT EINER WELLE UND MIT ZUMINDEST EINER AUF DIESER WELLE ANGEBRACHTEN NABE SOWIE EIN VERFAHREN ZUR HERSTELLUNG DIESER EINRICHTUNG**
DEVICE COMPRISING A SHAFT AND AT LEAST ONE HUB WHICH IS ATTACHED TO SAID SHAFT, AND A METHOD FOR PRODUCING THIS DEVICE
DISPOSITIF COMPORTANT UN ARBRE POURVU D'AU MOINS UN MOYEU, AINSI QUE PROCEDE POUR LA FABRICATION DE CE DISPOSITIF

(30) Priorität: 04.05.1998 CH 99598
(43) Veröffentlichungstag der Anmeldung: 12.04.2000
(73) Patentinhaber: Thyssen Krupp Automotive AG, 44793 Bochum (DE)
(72) Erfinder: MATT, Lukas, 9493 Mauren (LI)
(74) Vertreter: Kulhavy, Sava V.
(86) Internationale Anmeldenummer: PCT/CH1999/000175
(87) Internationale Veröffentlichungsnummer: WO 1999/057450

(56) Entgegenhaltungen:
- EP-A- 0 291 902
- DE-A- 3 732 223
- US-A- 2 279 954
- US-A- 2 279 956
- US-A- 4 882 825
- US-A- 5 503 494

## Beschreibung

Die vorliegende Erfindung betrifft eine Einrichtung mit einer Welle und mit zumindest einer auf dieser Welle angebrachten Nabe, wobei die Fläche zumindest eines der Ränder der Öffnung in der Nabe in einem vertikalen Längsschnitt ein gekrümmtes Profil aufweist, und wobei mindestens eine axial verlaufende Einbuchtung in der Wand der Öffnung in der Nabe ausgeführt ist.

Beispielsweise in US-PS 2,279,956 ist eine Einrichtung dieser Gattung offenbart. In der Nabenöffnung sind axial verlaufende Rillen mit einem rechteckförmigen Querschnitt ausgeführt, welche entlang dem Umfang der Nabenöffnung in gleichen Abständen voneinander verteilt sind. Die Welle ist mit umlaufenden Ringen versehen, wobei der jeweilige Ring aus Zähnen zusammengesetzt ist. Die Zähne der hintereinander liegenden Ringe sind hintereinander ausgerichtet, sodass sich die Zähne der jeweiligen Gruppe in der Axialrichtung der Welle erstrecken. Die Breite dieser Zähne entspricht der Breite der Rillen in der Nabenöffnung. Dadurch wird eine formschlüssige Verbindung zwischen der Welle und der Nabe erreicht. Zur Erleichterung der Einführung der aufeinander folgenden Zähne der jeweiligen Gruppe weist die Fläche des Randes der jeweiligen Rille in der Nabe in einem vertikalen Längsschnitt ein gekrümmtes Profil auf.

Die Welle steht nur über die Stirnflächen der Zähne mit der Nabenöffnung in Verbindung. Die Summe der Stimflächen der Zähne ist kleiner als die Fläche der Oeffnungswand in der Nabe. Unter schlagartiger Beanspruchung einer solchen Wellen-Naben-Verbindung kann eine Lockerung dieser Verbindung erfolgen, was eine Welle, beispielsweise eine Nockenwelle, unbrauchbar macht.

Die Krümmung der Fläche des Randes der Nabenöffnung soll das Einführen der Welle in die Nabe erieichten, indem die gekrümmte Wand das Material der das Uebermass aufweisenden Welle tiefer in das Innere der Welle treiben soll. Die gekrümmten Flächen sind in US-PS 2,279,956 ganz allgemein, d.h. nicht spezifisch erwähnt. Im allgemeinen werden gekrümmte Kanten in der Regel auf eine sehr sparsame Weise hergestellt, weil das Abtragen von Kanten eine zusätzliche Arbeitsoperation darstellt. Dies mag auf den übrigen Gebieten der Metallbearbeitung ausreichen. Bei der vorliegenden Welle-Nabe-Verbindung kommen ausserordentlich hohe Drücke beim Eindrücken der Welle in die Nabe vor. Wenn die Krümmung der Nabenkante in der sonst üblichen Weise hergestellt wird, dann wirkt jener Bereich des Nabenrandes, wo sich die gekrümmte Oberfläche der Kante mit der Nabeninnenwand trifft, auf die Welle normalerweise als eine Kante. Der Druck auf das durch die gekrümmte Oberfläche der Kante bereits vorgestauchte Material der Welle steigt im Bereich dieser Nabenkante sprunghaft an. Dies kann zur Folge haben, dass das Material der Welle im Bereich ihrer Oberfläche durch die Kante weggerissen wird. Auf einer so beschädigten Fügeoberfläche der Welle bzw. der Nabe ist der Sitz der Nabe auf der Welle nicht ausreichend definiert.

Die Aufgabe der vorliegenden Erfindung ist, diesen Nachteil sowie noch weitere Nachteile des Standes der Technik zu beseitigen.

Diese Aufgabe wird bei der Einrichtung der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Schnitt eine Welle und eine Nabe, bevor die Welle in die Nabe eingepresst wird,
Fig. 2 in einer Frontansicht eine Nabe, welche als eine Nocke ausgeführt ist,
Fig. 3 schematisch und in einem vertikalen Schnitt einen Ausschnitt aus einer ersten Ausführung der vorliegenden Erfindung,
Fig. 4 schematisch und in einen vertikalen Schnitt einen Ausschnitt aus einer zweiten Ausführung der vorliegenden Erfindung,
Fig. 5 in einer Seitenansicht einen Ausschnitt aus einer Welle, welche axial verlaufende Erhebungen aufweist,
Fig. 6 in einem Querschnitt die Welle aus Fig. 5,
Fig. 7 bis 11 schematisch und in einem vertikalen axialen Schnitt je einen Ausschnitt aus weiteren Ausführungen der vorliegenden Erfindung,
Fig. 12 bis 14 in einer Frontansicht Ausschnitte aus weiteren Ausführungen der Nabe und
Fig. 15 bis 17 in einer Frontansicht, wie die Nabe aus Fig. 12 hergestellt werden kann.

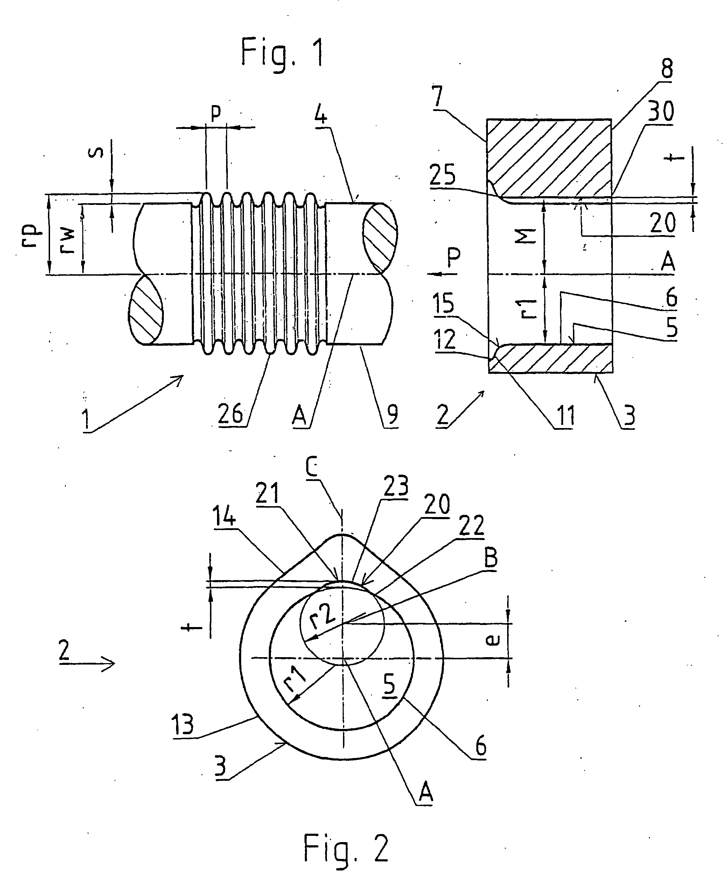

Die vorliegende Einrichtung weist eine Welle 1 und eine Nabe 2 auf (Fig. 1), welche auf einer gemeinsamen Hauptachse A liegen. Die vorliegende Einrichtung kann auch mehrere auf der Welle 1 aufgesetzte Naben 2 aufweisen (nicht dargestellt). In Fig. 1 ist die Nabe 2 in einem Abstand von der Welle 1 dargestellt, d.h. bevor die Nabe 2 auf die Welle 1 aufgesteckt wird. Diese Darstellung der vorliegenden Einrichtung bietet eine bessere Möglichkeit, die im vorliegenden Fall wesentlichen Einzelheiten der vorliegenden Einrichtung zu zeigen.

Die Nabe 2 kann beispielsweise als eine Nockenscheibe (Fig. 2) ausgeführt sein, welche auf der Welle 1 aufgepresst ist. Die Welle 1 zusammen mit einer oder mehreren Nockenscheiben 2 bildet eine zusammengebaute Nockenwelle. Es versteht sich jedoch, dass die Nabe 2 auch eine Innennabe eines homokinetischen Gelenks oder ein Bestandteil eines Zahnrades, Exzenters, einer Kurbelwange, Gelenkgabel, oder dgl. darstellen kann, wobei die Nabe 2 auf der Welle 1 reibschlüssig oder auch form- und reibschlüssig gefügt wird. Der Verband Welle 1 - Nabe 2 kann eine gebaute Kurbelwelle, Getriebewelle oder Antriebswelle oder eine gebaute Welle-Gabelverbindung oder dergleichen ergeben.

Die in Fig. 1 gezeigte Nabe 2 weist einen Grundkörper 3 auf, welcher im wesentlichen ringförmig ist und eine Oeffnung 5 hat. Die Wand 6 dieser Oeffnung 5 hat die Form des Mantels eines geometrischen Gebildes, dessen Mantellinie eine Gerade ist. Dieses geometrische Gebilde kann beispielsweise ein Zylinder oder ein Konus sein. An jede der Endpartien der Oeffnungswand 6 schliesst sich ein Oeffnungsrand 10 bzw. 30 an. Der Nabengrundkörper 3 weist ferner Seitenflächen 7 und 8 auf, welche praktisch senkrecht zur Hauptachse A stehen.

Die Welle 1 hat einen im wesentlichen zylinderförmigen Grundkörper 4. Damit ein Pressverband zwischen der Welle 1 und der Nabe 2 entstehen kann, weist die Welle 1 gegenüber der Nabenöffnung 5 ein Uebermass auf. Folglich ist der Radius r1 der Nabenöffnung 5 kleiner als der Radius rw resp. rp der Welle 1 im Fügebereich. Unter Umständen können die Radien r1 und rw dieser Bestandteile 4 und 5 der vorliegenden Einrichtung praktisch gleich gross sein oder eine Spielpassung aufweisen.

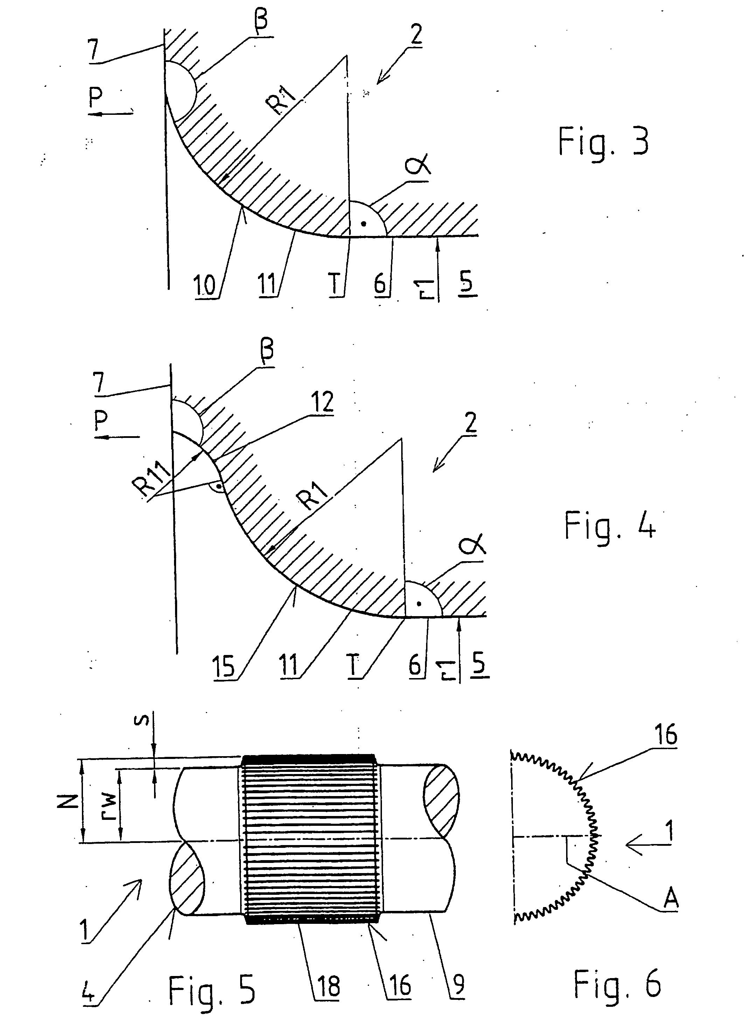

Fig. 3 zeigt schematisch und in einem vertikalen Schnitt einen Ausschnitt aus einer ersten Ausführungsform der vorliegenden Einrichtung. Dieser Ausschnitt umfasst nur einen Teil der Nabe 2 und dieser Ausschnitt zeigt einen der Ränder 10 der Nabenöffhung 5. Dieser Rand 10 stellt einen Uebergangsbereich zwischen der Innenwand 6 der Nabenöffnung 5 und einer der Seiten- bzw. Stirnflächen 7 des Nabengrundkörpers 3 dar. Wenn man einen vertikal verlaufenden Schnitt so führt, dass die Hauptachse A der Nabenöffnung 5 in der Ebene dieses Schnittes liegt, dann erscheint der Schnitt durch diesen Oeffnungsrand 10 als ein konvexer Bogen 11. Jener Endabschnitt der Kurve 11, der sich an den Anfang der in gleicher Schnittebene liegenden und geradlinig verlaufenden Mantellinie 6 der Nabenöffnung 5 anschliesst, liegt auf derselben Geraden wie der Anfang der genannten Mantellinive 6.

Diesen Sachverhalt kann man auch auch so zum Ausdruck bringen, dass die gekrümmte Oberfläche 11 des Oeffnungsrandes 10 sich an die Innenfläche 6 der Nabenöffnung 5 tangential anschliesst. Dies bedeutet, dass die Tangente an den Bogen 11 in einem Berührungspunkt T eine Mantellinie der Innenwand der Bohrung bildet. Der Berührungspunkt T ist definiert als der gemeinsame Punkt des Bogens 11 und der Mantellinie der Innennd 6 der Bohrung 5. Der Uebergang zwischen dem Bogen 11 und der Mantellinie der Bohrung 5 verläuft kontinuierlich. Das heisst, dass am Berührungspunkt T nur eine Tangente gebild werden kann. Im in Fig. 3 dargestellten Beispiel hat der Bogen 11 die Form eines Kreisbogens mit einem Radius R1. Der Radius R1 im Berührungspunkt T bildet mit der Mantellinie 6 einen Winkel Alpha von 90 Grad.

Zumindest der in der Aufpressrichtung P liegende Oeffnungsrand 10 weist im Längsschnitt den bogenförmigen Verlauf 11 auf. Es ist jedoch ohne weiteres möglich, dass der gegenüberliegende Oeffnungsrand 30 (Fig. 1) im Längsschnitt einen solchen Verlauf 11 ebenfalls hat.

Der Oeffnungsrand 10 mit dem bogenförmigen Längsschnitt bzw. Profil 11 erstreckt sich zwischen dem Innenbereich 6 der Nabenöffnung 5 und einer der Nabenseitenflächen 7 bzw. 8. Dabei kann sich der Bogen 11, welcher den Längsschnitt durch den Oeffnungsrand 10 darstellt, an die Nabenseitenfläche 7 ebenfalls tangential anschliessen. Dies ist jedoch nicht unbedingt nötig. Der Winkel Beta, welcher sich zwischen der Nabenseitenfläche 7 und dem sich an diese anschliessenden Endabschnitt des Bogens 11 erstreckt, kann kleiner sein als 180 Grad, wie dies in Fig. 3 angedeutet ist.

Fig. 4 zeigt schematisch und in einem vertikalen Schnitt einen Ausschnitt aus einer zweiten Ausführung der vorliegenden Erfindung. Bei dieser Einrichtung hat der Oeffnungsrand 15 in einem vertikalen Schnitt ein aus zwei Bogen 11 und 12 zusammengesetztes Profil. Jener Bogen 11 dieses Oeffnungsrandes 15, welcher sich an die betreffenden Mantellinie der Nabeninnenwand 6 anschliesst, ist konvex. Jener Bogen 12 des Nabeninnenrandes 15, welcher in die Nabenseitenfläche 7 übergeht, ist konkav. Die Krümmungen 11 und 12 des Profils des Oeffnungsranes 15 treffen sich in der Weise, dass sie tangential ineinander laufen. Im dargestellten Fall sind die Bogen 11 und 12 Kreisbogen mit den Radien R1 und R11. Der Radius R11 des zweiten Bogens 12 ist kleiner als der Radius R1 des ersten Bogens 11.

Jener Endabschnitt des ersten Bogens 11, welcher sich an den Anfang der Mantellinie der Innenwand 6 der Nabenöffnung 5 anschliesst, liegt auf derselben Geraden wie der Anfang der genannten Mantellinie 6. Dies entspricht jener Situation, welche in Fig. 3 dargestellt ist, sodass auch im Fall gemäss Fig. 4 ein kontinuierlicher Uebergang ohne schädliche Kanten gewährleistet ist. Jener Endabschnitt des zweiten Bogens 12, welcher in der Nabenseitenwand 7 endet, steht wegen der konkaven Form dieses Bogens 12 allerdings unter einem verhältnismässig steilen Winkel Beta zu dieser Seitenwand 7.

Bei diesen Ausführungsformen der vorliegenden Einrichtung kann der Grundkörper 4 der Welle 1 eine glatte zylinderförmige Aussenfläche 9 haben. Bei bestimmten Anwendungen der vorliegenden Einrichtung ist es jedoch erforderlich, dass die Welle 1 eine Aussenfläche 9 mit Erhebungen aufweist.

Fig. 5 und 6 zeigen eine der Ausführungen der vorliegenden Einrichtung, bei welcher die Welle 1 Erhebungen aufweist. Diese Erhebungen sind als axial verlaufende Vorsprünge 16 ausgeführt, welche sich aus der zylinderförmigen Aussenfläche 9 der Welle 1 erheben. Solche Vorsprünge 16 können beispielsweise durch Treiben, vorzugsweise durch Rollieren oder Walzen des Materials der Welle 1 oder aber auch spanabhebend hergestellt werden und sie können sich wenigstens in jenem Bereich der Länge der Welle 1 befinden, welchen die auf die Welle 1 aufgepresste Nabe 2 einnimmt.

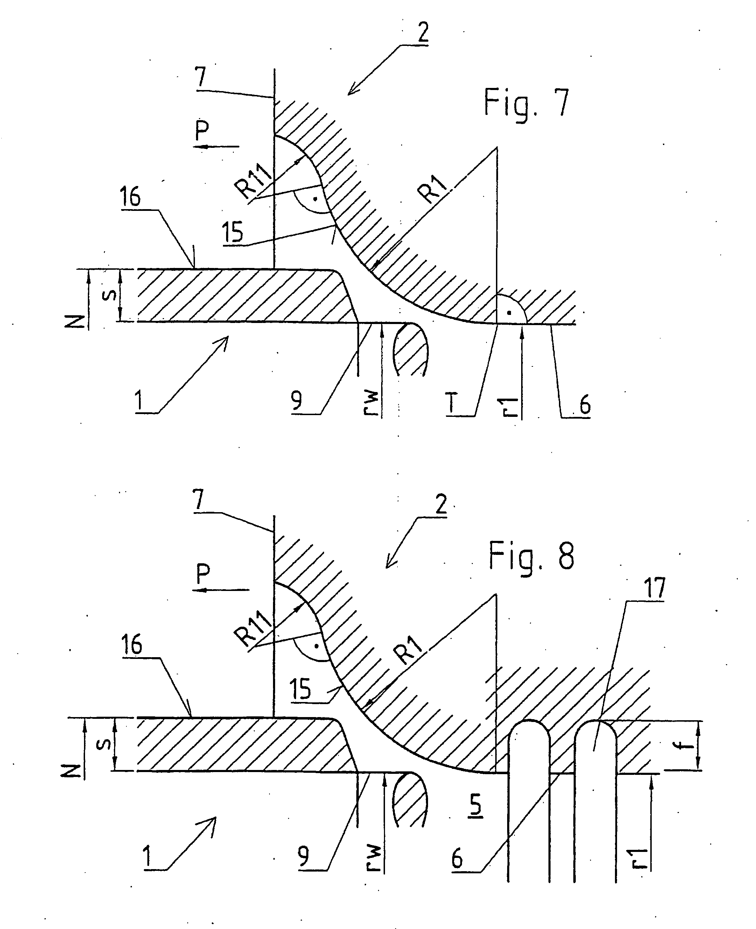

Der Scheitel 18 der jeweiligen Erhebung 16 befindet sich in einem Abstand s über der Aussenfläche 9 der Welle. Der Abstand des Scheitels 18 der jeweiligen Erhebung 16 von der Längsachse A beträgt N. N gleicht rw plus s. Die so ausgeführte Welle 1 ist der Nabe 2 zugeordnet (Fig. 7), deren Rand 15 das aus den Bogen 11 und 12 zusammengesetzte Profil hat. Dieses Profil ist in Fig. 4 dargestellt. Der Abstand N ist grösser als der Radius r1 der Oeffnung 5 in der Nabe 2.

Um die Festigkeit des Sitzes der Nabe 2 auf der Welle 1 noch weiter steigern zu können, ist eine weitere Ausführungsform der vorliegenden Einrichtung vorgesehen. Diese Ausführungsform ist in Fig. 8 abgebildet und sie geht von jener Ausführungsform dieser Einrichtung aus, welche im Zusammenhang mit Fig. 5 bis 7 beschrieben wurde. Bei der Einrichtung gemäss Fig. 8 sind umlaufende Vertiefungen 17 in der Innenwand 6 der Nabenöffnung 5 ausgeführt. Diese praktisch ringförmigen Vertiefungen 17 stehen rechtwinklig zur Längsachse A der Nabenöffnung 5 und sie befinden sich in Abständen voneinander. Die Tiefe dieser Vertiefungen 17 ist zumindest so gross wie die Höhe s der axial verlaufenden Erhebungen 16 auf der Welle 1. Die axial verlaufenden Erhebungen 16 sind vorzugsweise härter als die Nabe 2 an der Nabenöffnung 5.

Bei den vorstehend beschriebenen Ausführungen dieser Einrichtung kann sich die Nabenöffnung 5 vom gekrümmten Rand 10 bzw. 15 weg über die Nabenbreite kontinuierlich verengen, sodass die Wand 6 der Nabenöffnung 5 die Form eines Konusses hat. Die Grösse des Radius r1 der Nabenöffnung 5 kann jedoch auch stufenweise abnehmen. Diese Ausführung bringt bei hoch präzisen Welle-Nabe-Verbindungen den Vorteil, dass über die gesamte Nabenbreite die Flächenpressungen so eingestellt werden können, dass die Nabe nach der Fügung achsparallele Aussenkontur-Mantellinien aufweist. Diese Massnahme erlaubt es z.B., bereits vor der Fügung fertig geschliffene Zahnräder oder Nocken zu verwenden, die nach der Fügung als zusammengebaute Wellen nicht mehr bearbeitet werden müssen.

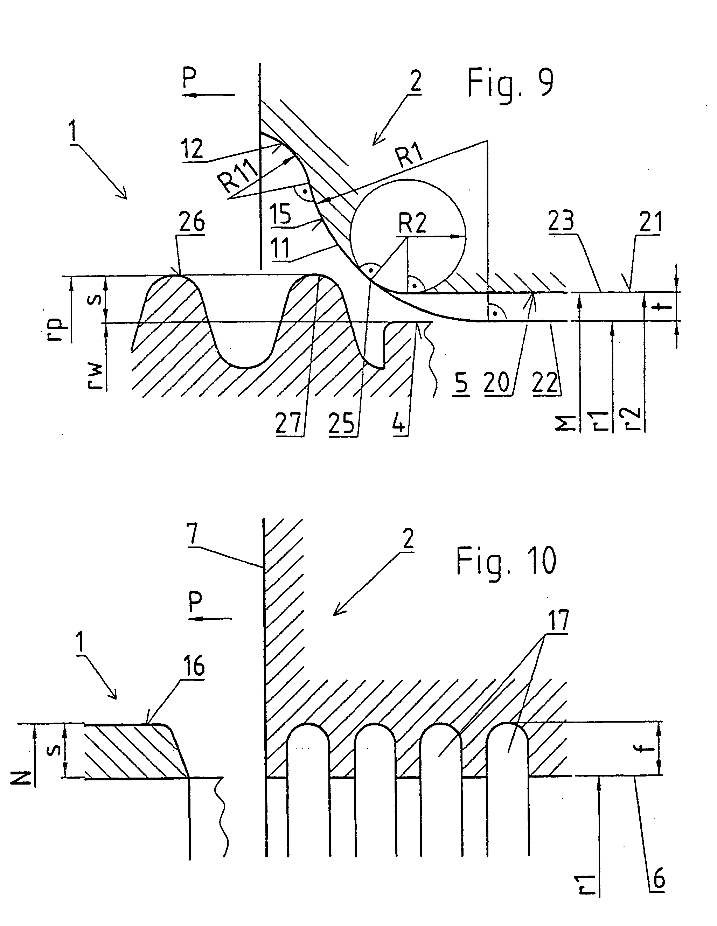

Fig. 1 und 2 sowie Fig. 9 zeigen eine weitere Ausführung der vorliegenden Einrichtung. Fig. 9 zeigt einen vergrösserten Ausschnitt aus dieser Einrichtung. Auch bei dieser Ausführung ist die Innenwand 6 der Nabenöffnung 5 im wesentlichen zylinderförmig und dieser Zylinder hat einen Radius r1. In einer solchen Nabenöffnung 5 ist eine axial verlaufende Aus- bzw. Einbuchtung 20 mit einer Tiefe t ausgeführt. Die Wand 21 dieser Einbuchtung 20 stellt vorzugsweise einen Abschnitt des Mantels eines Zylinders dar, dessen Radius r2 kleiner ist als der Radius r1 der Nabenöffnung 5. Die Achse B dieses zweiten Zylinders 20 befindet sich in einem Abstand e von der Längsachse A der Nabenöffnung 5 und die Achse B verläuft parallel zur Längsachse A. Der Abstand e zwischen den Achsen A und B kann als Exzentrizität bezeichnet werden. Die Wand 21 der Einbuchtung 20 kann aber auch von der geometrisch exakten Zylinderform abweichen.

Die in Fig. 1 und 2 dargestellte Nabe 2 ist als eine Nockenscheibe ausgeführt. Ueber der Umfangsfläche 13 des Grundkörpers 3 der Nabe 2 erhebt sich eine Nocke 14. Unter anderem aus Festigkeitsgründen ist es zweckmässig, die Einbuchtung 20 in der Nabe 2 so anzuordnen, dass diese unterhalb der Nocke 14 der Nockenscheibe 2 liegt. Dabei ist es besonders vorteilhaft, wenn sich die Einbuchtung 20 symmetrisch zur vertikalen Achse C des Nockens 14 befindet.

Der Radius r2 des Einbuchtungszylinders 20 kann kleiner sein als der Radius r1 der Nabenöffnung 5. Bei diesen Verhältnissen der Radien r1 und r2 entsteht an jener Stelle, wo sich die Wände 6 und 21 der Zylinder 5 und 20 schneiden, eine Kante 22. Diese Kante 22 kann verrundet oder scharfkantig ausgeführt werden. Beim Einpressen der Welle 1 in die Nabenöffnung 5 dringt das Material der Welle 1 in die Einbuchtung 20 ein. Dabei formen sich die genannten Kanten 22 im Inneren der Nabenöffnung 5 seitlich in den in der Einbuchtung 20 liegenden Anteil des Materials der Welle 1 ein. Dadurch wird ein allfälliges Durchdrehen der Welle 1 in der Nabe 2 wirksam verhindert, wenn dieser Verband belastet wird.

Zwischen dem entsprechenden Endbereich der Ein- bzw. Ausbuchtung 20 und dem Uebergangsbogen 11 liegt ein Bogen 25, welcher tangential in den Bogen 11 und tangential in die Mantellinie der Ausbuchtungswand 21 verläuft (Fig. 9). Diese Ausprägung gewährleistet ein vorteilhaftes Fliessen des Materials während des Fügevorgangs.

Im Zusammenhang mit dieser Ausführung der Nabe 2 kann es zweckmässig sein, die Welle 1 mit umlaufenden Materialerhebungen 26 (Fig. 9) zu versehen. Diese Erhebungen 26 können die Windungen eines Gewindes sein oder sie können Ringe auf der Welle 1 darstellen, welche senkrecht zur Längsachse A der Welle 1 stehen. Die Höhe der Scheitel 27 Windungen bzw. der Ringe 26 über dem Wellengrundkörper 4 kann ebenfalls mit s bezeichnet werden. Der Abstand zwischen zwei benachbarten umlaufenden Erhebungen 26 kann mit p (Fig. 1) bezeichnet werden und dieser Abstand p kann der Breite einer Erhebung 26 gleichen. Der Radius rp der Erhebungen 26 kann dem Abstand M zwischen der Längsachse A der Nabenöffnung 5 und der von der Längsachse A am meisten entfernten Bodenlinie 23 der Wand 21 der Einbuchtung 20 gleichen. Der Radius rp kann auch etwas grösser sein als der Abstand M.

Im Prinzip ist es möglich, die in Fig. 5 bis 8 dargestellte Welle 1 mit den axial verlaufenden Materialerhebungen 16 auch im Zusammenhang mit der Nabe 2 gemäss Fig. 1 bzw. 2 zu verwenden. Die Welle 1 mit den umlaufenden Materialerhebungen 26 (Fig. 9) kann im Zusammenhang mit den übrigen hier offenbarten Ausführungen der Nabe 2 ebenfalls benützt werden.

Die die Einbuchtung 20 aufweisende Ausführung der vorliegenden Einrichtung (Fig. 2) kann in der Weise hergestellt werden, dass im Rohling der Nabe 2, welches eine roh ausgeführte Oeffnung 5 bereits aufweist, zunächst die Nabenöffnung 5 zusammen mit dem Bogen 11 durch ein erstes Ausdrehen massgenau hergestellt wird. Dabei steht das Werkstück, d.h. der Rohling der Nabe 2, still. Das Drehwerkzeug (nicht dargestellt) ist bewegbar und es umfasst einen stangenförmigen Träger, aus dessen Seitenfläche ein Vorsprung aus einem sehr harten Material hervortritt. Das Drehwerkzeug bewegt sich entlang einer Schraubenlinie, deren Längsachse mit der Längsachse A zusammenfällt und deren Radius etwa r1 gleicht. Der Vorsprung steht vom stangenförmigen Träger stets radial ab. Während dieses Abschnittes des vorliegenden Verfahrens können die Abschnitte 6 und 10 bzw. 15 der Nabenöffnung 5 hergestellt werden.

Nach Beendigung dieses ersten Herstellungsabschnittes beginnt ein zweites Ausdrehen der Oeffnung 5 in der Nabe 2. Am Anfang dieses zweiten Herstellungsabschnittes wird das Drehwerkzeug um den Abstand e aus der Längsachse A der Nabe 2 bewegt, d.h. gegen die Wand 6 der Nabenöffnung 5 hin. Das Werkzeug bewegt sich dann entlang einer Schraubenlinie, deren Längsachse zur Hauptachse A parallel verläuft und deren Radius dem Radius r2 entspricht. Während dieses Verfahrensabschnittes werden die Wand 21 der Ein- zw. Ausbuchtung 20, der Bogen 25 sowie die Kanten 22 hergestellt.

In diesem Verfahren können somit die Nabenöffnung 5, die Einbuchtung 20 sowie die Bogen 11, 12 und 25 auf derselben Maschine hergestellt werden.

Werden an die Nabenfestigkeit und Dichte des Nabenmaterials keine allzugrossen Anforderungen gestellt, eignet sich für die Herstellung der Nabenteile in vielen Fällen ein Sinterverfehren. In diesem Verfahren wird Stahlpulver zu einem sogenannten Grünling verpresst, der durch Sinntern in einem Ofen auf die erforderliche Festigkeit gebracht wird. Dies ist vor allem bei hohen Stückzahlen eine wirtschaftliche Herstellmethode. Die Nabenbohrungen mit den Radien r1 und r2 und den entsprechenden tangential verlaufenden Radien R1, R11 und R2 können in diesem Verfahren ohne spanabhebende Bearbeitung hergestellt werden.

Fig. 10 zeigt noch eine weitere Ausführung der vorliegenden Einrichtung. Die Welle 1 ist mit den bereits beschriebenen axial verlaufenden Erhebungen 16 versehen. In der Innenwand 6 der Nabe 2 sind die bereits ebenfalls beschriebenen umlaufenden Vertiefungen 17 ausgeführt. Die Tiefe f der Vertiefungen 17 in der Nabe 2 ist zumindest so gross wie die Höhe s der axial verlaufenden Erhebungen 16. Die axial verlaufenden Erhebungen 16 sind vorzugsweise aus einem härteren Material als die Nabe 2.

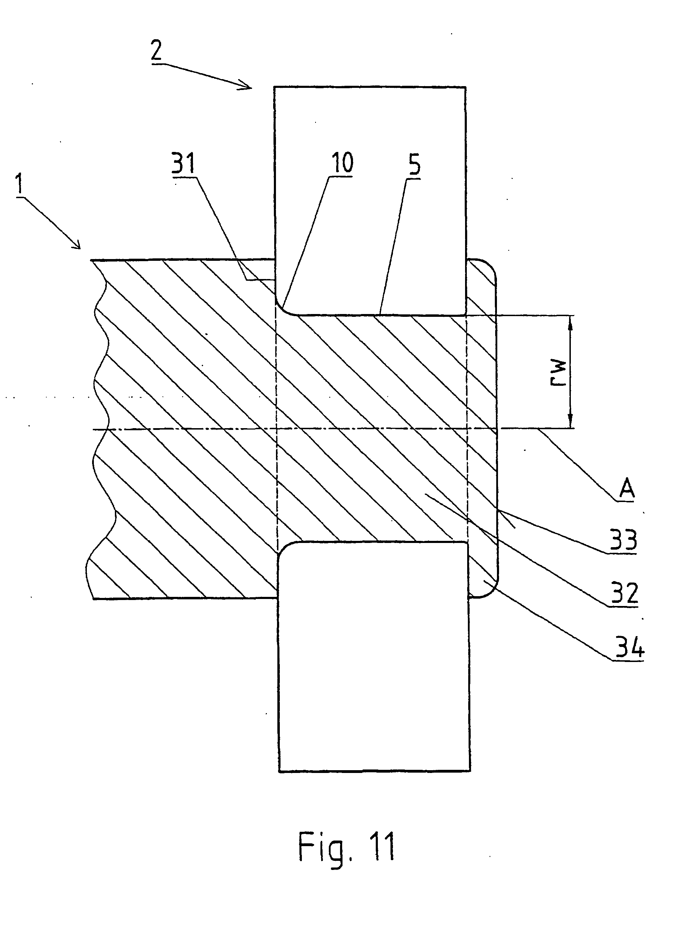

Bei der in Fig. 11 dargestellten Ausführungsform der vorliegenden Einrichtung ist die Nabe 2 an einem der Enden der Welle 1 befestigt. Die die Nabe 2 tragende Endpartie der Welle 1 ist mit einem Bund 31 versehen, an welchem die Nabe 2 anschlagen kann. Der Radius rw der Welle resp. der Radius rp der Materialerhebungen der Welle können in diesem Anwendungsfall der Erfindung zusammen mit der Schulter 31 spanabhebend hergestellt werden. Die Länge des abgesetzten Abschnittes 32 der Welle 1 ist so gewählt, dass eine Partie 33 des Wellenabschnittes 32 aus der Nabenöffnung 5 ragt. Nachdem die Nabe 2 in der vorstehend beschriebenen Weise auf die Welle 1 bis zum Anschlag am Bund 31 gepresst worden ist, wird der aus der Nabenöffnung 5 ragende Abschnitt 33 der Welle 1 gegen die Nabe 2 zusätzlich vertaumelt oder verstemmt. Die kreisförmige Flanke 34 der so verformten Wellenpartie 33 stellt einen breit geschlagenen Kopf der Welle 1 dar, welcher einen besonders starken Sitz der Nabe 2 auf der Welle 1 sicherstellt.

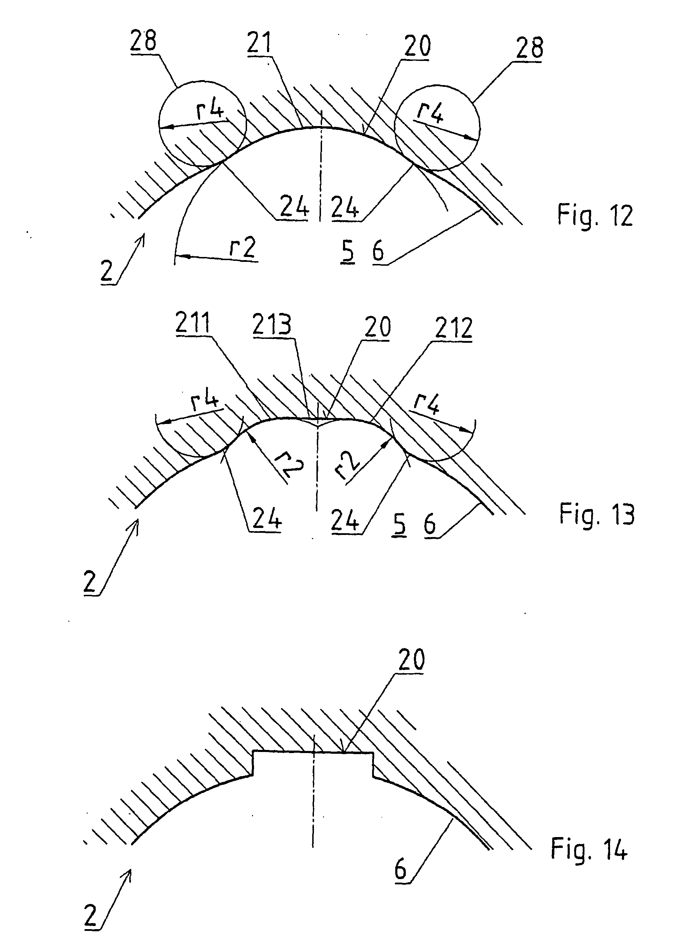

Fig. 12 zeigt eine Ausführungsform der vorliegenden Einrichtung, bei welcher die Oeffnung 5 in der Nabe 2 eine ähnliche Kontur aufweist wie die Oeffnung 5 bei der Nabe gemäss Fig. 2. Der Unterschied zwischen den Konturen der Nabenöffnungen gemäss Fig. 2 und 12 besteht im Verlauf der Kontur des Uebregangsbereiches 24 zwischen der Wand 6 der Nabenöffnung 5 und der Wand 21 der Einbuchtung 20. Im in Fig. 12 dargestellten Fall hat der Uebergangsbereich 24 die Form eines Bogens. Dieser Bogen 24 kann ein Abschnitt eines Kreises 28 mit einem Halbmesser r4 sein. Dieser Kreisabschnitt 24 geht tangential sowohl in die Wand 6 der Nabenöffnung 5 als auch in die Wand 21 der Einbuchtung 20 über. Bei der Nabe gemäss Fig. 2 hat die Kontur dieses Uebergangsbereichs 22 einen unstetigen Verlauf, sodass sich hier eine Kante 22 an der Nabe 2 befindet.

Die Form gemäss Fig. 12 wird so hergestellt, dass ein sogenannter Fingerfräser mit dem Radius r2 in die Bohrung 5 eingeführt wird und dass dieser Fräser in der Bohrung 5 so bewegt wird, dass der bogenförmige Uebergangsbereich 24 der Kontur der Nabenöffnung 5 entsteht.

Das Profil der Wand 6 der Nabenöffnung 5 gemäss Fig. 13 stellt eine Abwandlung des in Fig. 12 dargestellten Profils dar. Das Profil der Wand der Einbuchtung 20 gemäss Fig. 12 ist ein zusammengesetztes Profil, welches zwei Bogen 211 und 212 und einen sich zwischen diesen Bogen 211 und 212 erstreckenden und geradlinig velaufenden Abschnitt 213 umfasst. Die Bogen 211 und 212 haben eine Winkellänge von praktisch nur 90 Grad und jeder von diesen Bogen 211 bzw. 212 schliesst sich einerends an den benachbarten und vorstehend beschriebenen Kreisbogenabschnitt 24 tangential an. Das jeweils gegenüberliegende Ende des jeweiligen Kreisbogenabschnittes 24 geht in den geradlinigen Abschnitt 213 des Profiles der Einbuchtung 20 tangential über.

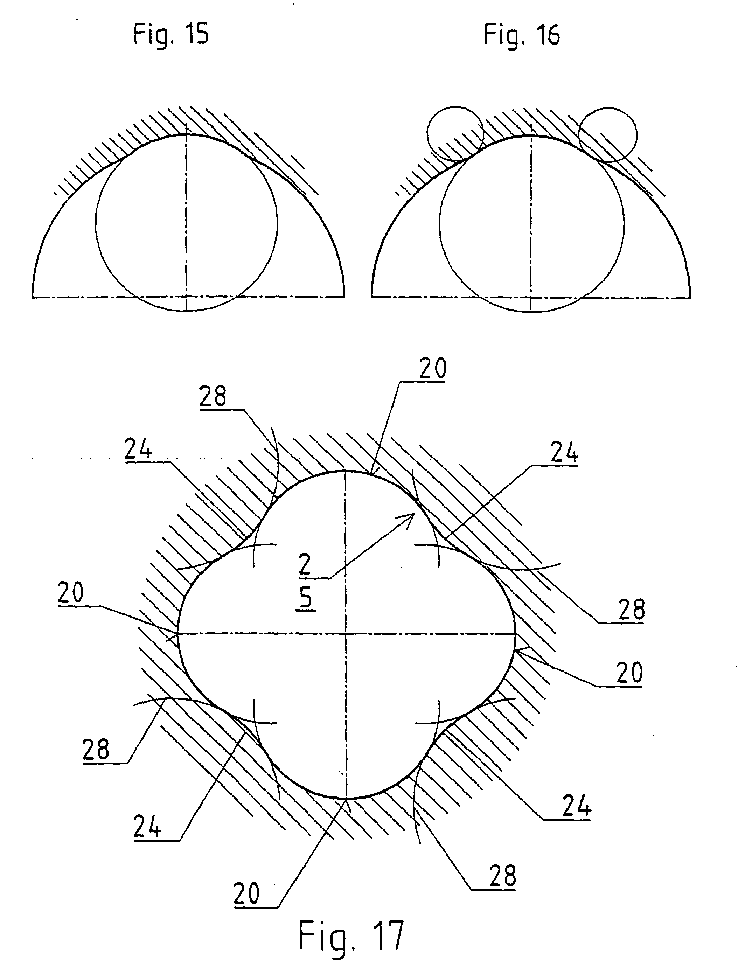

In Fig. 14 ist eine Ausführung der Einbuchtung 20 dargestellt, welche ein eckiges, im dargestellten Fall viereckförmiges Profil aufweist.

Fig. 17 zeigt eine Weiterentwicklung des Profils bzw. der Kontur der Oeffnung 5 in der Nabe 2, welche im Zusammenhang mit Fig. 12 beschrieben ist. Bei der Nabe 2 gemäss Fig. 17 sind vier Einbuchtungen 20 vorgesehen, von welchen je zwei einander diametral gegenüberliegen. Die Kontur bzw. das Profil des Uebergangsbereiches 24 zwischen den jeweils benachbarten Einbuchtungen 20 hat die Form eine Bogens. Dieser Bogen 24 kann ein Abschnitt eines Kreises 28 sein, wobei die Endpartien der Kontur der benachbarten Einbuchtungen 20 in die Endpartien des jeweiligen Kreisbogens 24 tangential übergehen. Die Kontur der Wand 6 der Oeffnung 5 in der Nabe 2 ist folglich eine Kurve, welche aus Bogen zusammengesetzt ist, wobei ein konvexer Bogen und ein konkaver Bogen miteinander abwechseln. Die Kontur dieser Nabenöffnung 5 hat somit die Form einer Wellenlinie.

## Patentansprüche

1. Einrichtung mit einer Welle (1) und mit zumindest einer auf dieser Welle angebrachten Nabe (2), wobei die Fläche (11) zumindest eines der Ränder (10;15) der Oeffnung (5) in der Nabe (2) in einem vertikalen Längsschnitt ein gekrümmtes Profil aufweist und wobei mindestens eine axial verlaufende Einbuchtung (20) in der Wand der Oeffnung (5) in der Nabe (2) ausgeführt ist, **dadurch gekennzeichnet, dass** sich die gekrümmte Fläche (11) zumindest eines der Ränder (10;15) der Oeffnung (5) in der Nabe (2) an die Innenfläche (6) der Nabenöffnung (5) tangential anschliesst, dass die Kontur der Wand (21) der Einbuchtung (20) die Form eines Kreisbogens hat, dass die Wand (6) der Nabenöffnung (5) die Form eines geometrischen Gebildes hat, dessen Mantellinie eine Gerade ist, dass die Welle (1) axial verlaufende oder/und umlaufende Materialerhebungen (16,26) aufweist, dass der Abstand (N;rp) des Scheitels dieser Erhebungen (16,26) von der Längsachse A der Welle (1) grösser ist als der Radius (rw) des nicht umgeformten Bereiches der Welle (1), dass der Radius (r1) der Oeffnung (5) in der Nabe (2) kleiner ist als der Scheiteiabstand (N;rp) der Erhebungen (16,26) an der Welle (1) und dass die Erhebungen sich wenigstens in jenem Bereich der Länge der Welle befinden, welchen die auf die Welle (1) aufgepresste Nabe (2) einnimmt.

2. Einrichtung nach Patentanspruch 1, **dadurch gekennzeichnet, dass** die Wand (21) der Einbuchtung (20) einen Abschnitt des Mantels eines Zylinders darstellt, dass der Radius (r2) dieses Zylinders kleiner ist als der Radius (r1) der Nabenöffnung (6) und dass die Achse (B) des Zylinders (20) in einem Abstand (e) von der Längsachse (A) der Nabenöffnung (5) und vorzugsweise parallel zu dieser Längsachse (A) verläuft.

3. Einrichtung nach Patentanspruch 1, **dadurch gekennzeichnet, dass** der Verlauf der Kontur des Uebergangsbereiches (24) zwischen der Wand (6) der Nabenöffnung (5) und der Wand (21) der Einbuchtung (20) die Form eines Bogens hat, dass dieser Bogen (24) ein Abschnitt eines Kreises (28) mit einem Halbmesser (r4) ist und dass dieser Kreisabschnitt (24) sowohl in die Wand (6) der Nabenöffnung (5) als auch in die Wand (21) der Einbuchtung (20) tangential übergehen kann, oder dass der genannte Uebergangsbereich (24) einen unstetigen Verlauf aufweist, sodass dieser Uebergangsbereich (24) als eine Kante (22) in der Nabe (2) ausgebildet ist.

4. Einrichtung nach Patentanspruch 1, **dadurch gekennzeichnet, dass** das Profil der Wand (6) der Einbuchtung (20) ein zusammengesetztes Profil ist, dass dieses Profil zwei Bogen (211,212) und einen sich zwischen diesen Bogen (211,212) erstreckenden und geradlinig verlaufenden Abschnitt (213) umfasst, dass die Bogen (211,212) eine Winkellänge von praktisch nur 90 Grad hat, dass sich jeder der Bogen (211 bzw. 212) einerends an den benachbarten Kreisbogenabschnitt (24) tangential anschliesst und dass das gegenüberliegende Ende des jeweiligen Kreisbogenabschnittes (24) in den geradlinigen Abschnitt (213) des Profiles der Einbuchtung (20) tangential übergeht..

5. Einrichtung nach Patentanspruch 1, **dadurch gekennzeichnet**, die Kontur der Wand (6) der Oeffnung (5) in der Nabe (2) eine Kurve bildet, welche aus Bogen zusammengesetzt ist und dass ein konvexer Bogen und ein konkaver Bogen miteinander abwechseln, sodass die Kontur die Form einer Wellenlinie hat.

6. Einrichtung nach Patentanspruch 5, **dadurch gekennzeichnet, dass** die Nabenwand (6) vier Einbuchtungen (20) aufweist, dass je zwei Einbuchtungen (20) einander diametral gegenüberliegen, dass die Kontur bzw. das Profil des Uebergangsbereiches (24) zwischen den jeweils benachbarten Einbuchtungen (20) die Form eines Bogens hat, dass dieser Bogen (24) ein Abschnitt eines Kreises (28) sein kann, und dass die Endpartien der Kontur der benachbarten Einbuchtungen (20) in die Endpartien des jeweiligen Kreisbogens (24) tangential übergehen können.

7. Einrichtung nach Patentanspruch 1, bei der die Welle (1) umlaufende Materialerhebungen (26) aufweist, **dadurch gekennzeichnet, dass** der Radius (rp) der Erhebungen dem Abstand (M) zwischen der Längsachse (A) der Nabenöffnung (5) und der von der Längsachse (A) weitest entfernten Stelle (23) der Wand (21) der Einbuchtung gleicht oder dass der Radius (rp) grösser ist als dieser Abstand (M).

8. Einrichtung nach Patentanspruch 7, **dadurch gekennzeichnet, dass** die Nabe einen Abschnitt (25) mit einem im Vertikalschnitt konvex verlaufenden Profil aufweist, dass dieses Profil (25) sich zwischen dem konvex verlaufenden Profil (11) des Oeffnungsrandes (10) und der Einbuchtung (20) in der Oeffnungswand (6) erstreckt und dass das Profil (25) sich einerseits an das Profil (11) des Oeffnungsrandes (10) und andererseits an die Innenfläche (21) der Einbuchtung (20) tangential anschliesst.

9. Einrichtung nach Patentanspruch 1, bei der die Welle axial verlaufende Erhebungen (16) aufweist, **dadurch gekennzeichnet, dass** umlaufende Vertiefungen (17) in der Innenwand (6) der Nabenöffnung (5) ausgeführt sind, dass diese praktisch ringförmige Vertiefungen praktisch rechtwinklig zur Längsachse (A) der Nabenöffnung (5) stehen und sich in Abständen voneinander befinden, dass die Tiefe (f) dieser Vertiefungen (17) mindestens so gross ist wie die Höhe (s) der axial verlaufenden Erhebungen (16) und dass die axial verlaufende Erhebungen härter sind als die Wand (6) der Nabenöffnung (5).

10. Einrichtung nach Patentanspruch 1, **dadurch gekennzeichnet, dass** die Randpartie (15) der Nabenöffnung (5) ein aus zumindest zwei gekrümmt verlaufenden Profilabschnitten (11,12) zusammengesetztes Profil aufweist, dass jener Abschnitt (11) dieser Randpartie (15), welcher sich an die Oeffnungswand (6) anschliesst, konvex verläuft, dass jener Abschnitt (12) des Nabenrandes (15), welcher sich an die Nabenseitenfläche (7) anschliesst, konkav verläuft und dass diese gekrümmt verlaufenden Abschnitte (11,12) des Oeffnungsrandes (15) tangential ineinander laufen.

11. Einrichtung nach Patentanspruch 1, **dadurch gekennzeichnet, dass** die Nabe (2) an einem, der Enden der Welle (1) befestigt ist, dass die die Nabe (2) tragende Endpartie der Welle (1) mit einem Bund (31) versehen ist, an welchem die Nabe (2) anschlagen kann, dass die Länge des abgesetzten Abschnittes (32) der Welle (1) so gewählt ist, dass eine Partie (33) des Wellenabschnittes (32) aus der Nabenöffnung (5) ragt und dass der aus der Nabenöffnung (5) ragenden Abschnitt (33) der Welle (1) gegen die Nabe (2) vertaumelt oder verstemmt ist.

12. Einrichtung nach Patentanspruch 1, **dadurch gekennzeichnet, dass** die Innenfläche (6) der Nabenöffnung (5) als Mantel eines geometrischen Gebildes ausgeführt ist, dass das Profil (11) der Nabenöffnung (5) einerends in die Mantellinien der Innenfläche (6) tangential übergeht, dass die Mantellinien des genannten Gebildes Geraden oder Stufenlinien sind und dass die Geraden parallel oder zusammenlaufend zueinander angeordnet sind.

## Claims

1. Device with a shaft (1) and with at least one hub (2) mounted on this shaft, the face (11) of at least one of the edges (10;15) of the orifice (5) in the hub (2) having a curved profile in a vertical longitudinal section, and at least one axially running indentation (20) being formed in the wall of the orifice (5) in the hub (2), **characterized in that** the curved face (11) of at least one of the edges (10;15) of the orifice (5) in the hub (2) tangentially adjoins the inner face (6) of the hub orifice (5), **in that** the contour of the wall (21) of the indentation (20) is in the form of an arc of a circle, **in that** the wall (6) of the hub orifice (5) is in the form of a geometric structure, the generatrix of which is a straight line, **in that** the shaft (1) has axially running and/or peripheral material elevations (16,26), **in that** the distance (N;rp) of the vertex of these elevations (16,26) from the longitudinal axis A of the shaft (1) is greater than the radius (rw) of the non-formed region of the shaft (1), **in that** the radius (r1) of the orifice (5) in the hub (2) is smaller than the vertex distance (N;rp) between the elevations (16;26) on the shaft (1), and **in that** the elevations are located at least **in that** region of the length of the shaft which is occupied by the hub (2) pressed onto the shaft (1).

2. Device according to Patent Claim 1, **characterized in that** the wall (21) of the indentation (20) constitutes a segment of the surface area of a cylinder, **in that** the radius (r2) of this cylinder is smaller than the radius (r1) of the hub orifice (6), and **in that** the axis (B) of the cylinder (20) runs at a distance (e) from the longitudinal axis (A) of the hub orifice (5) and preferably parallel to this longitudinal axis (A).

3. Device according to Patent Claim 1, **characterized in that** the run of the contour of the transitional region (24) between the wall (6) of the hub orifice (5) and the wall (21) of the indentation (20) is in the form of an arc, and that this arc (24) is a segment of a circle (28) with a radius (r4), and **in that** this circle segment (24) can merge tangentially both into the wall (6) of the hub orifice (5) and into the wall (21) of the indentation (20), or **in that** the said transitional region (24) has a discontinuous run, so that this transitional region (24) is formed as a cant (22) in the hub (2).

4. Device according to Patent Claim 1, **characterized in that** the profile of the wall (6) of the indentation (20) is a composite profile, **in that** this profile comprises two arcs (211,212) and a segment (213) extending between these arcs (211,212) and running rectilinearly, **in that** the arcs (211,212) have an angular length of virtually only 90 degrees, **in that** each of the arcs (211 or 212), at one end, tangentially adjoins the adjacent segment of an arc of a circle (24), and **in that** the opposite end of the respective segment of an arc of a circle (24) merges tangentially into the rectilinear segment (213) of the profile of the indentation (20).

5. Device according to Patent Claim 1, **characterized in that** the contour of the wall (6) of the orifice (5) in the hub (2) forms a curve which is composed of arcs, and **in that** a convex arc and a concave arc alternate with one another, so that the contour is in the form of a wavy line.

6. Device according to Patent Claim 5, **characterized in that** the hub wall (6) has four indentations (20), **in that** in each case two indentations (20) are located diametrically opposite one another, **in that** the contour or the profile of the transitional region (24) between the respectively adjacent indentations (20) is in the form of an arc, **in that** this arc (24) can be a segment of a circle (28), and **in that** the end parts of the contour of the adjacent indentations (20) can merge tangentially into the end parts of the respective arc of a circle (24).

7. Device according to Patent Claim 1, in which the shaft (1) has peripheral material elevations (26), **characterized in that** the radius (rp) of the elevations is identical to the distance (M) between the longitudinal axis (A) of the hub orifice (5) and that point (23) of the wall (21) of the indentation which is furthest away from the longitudinal axis (A), or **in that** the radius (rp) is larger than this distance (M).

8. Device according to Patent Claim 7, **characterized in that** the hub has a segment (25) with a profile running convexly in vertical section, **in that** this profile (25) extends between the convexly running profile (11) of the orifice edge (10) and the indentation (20) in the orifice wall (6), and **in that** the profile (25) tangentially adjoins the profile (11) of the orifice edge (10), on the one hand, and the inner face (21) of the indentation (20), on the other hand.

9. Device according to Patent Claim 1, in which the shaft has axially running elevations (16), **characterized in that** peripheral depressions (17) are formed in the inner wall (6) of the hub orifice (5), **in that** these virtually annular depressions are virtually at right angles to the longitudinal axis (A) of the hub orifice (5) and are located at distances from one another, **in that** the depth (f) of these depressions (17) is at least as great as the height (s) of the axially running elevations (16), and **in that** the axially running elevations are harder than the wall (6) of the hub orifice (5).

10. Device according to Patent Claim 1, **characterized in that** the edge part (15) of the hub orifice (5) has a profile composed of at least two curvedly running profile segments (11,12), **in that** that segment (11) of this edge part (15) which adjoins the orifice wall (6) runs convexly, **in that** that portion (12) of the hub edge (15) which adjoins the hub side face (7) runs concavely, and **in that** these curvedly running segments (11,12) of the orifice edge (15) run tangentially one into the other.

11. Device according to Patent Claim 1, **characterized in that** the hub (2) is fastened to one of the ends of the shaft (1), **in that** that end part of the shaft (1) which carries the hub (2) is provided with a collar (31) against which the hub (2) can butt, **in that** the length of the stepped segment (32) of the shaft (1) is selected such that a part (33) of the shaft segment (32) projects out of the hub orifice (5), and **in that** that segment (33) of the shaft (1) which projects out of the hub orifice (5) is tumbled or caulked against the hub (2).

12. Device according to Patent Claim 1, **characterized in that** the inner surface (6) of the hub orifice (5) is formed as the outer surface of a geometric structure, **in that** the profile (11) of the hub orifice (5), at one end, merges tangentially into the generatrices of the inner face (6), **in that** the generatrices of the said structure are straight lines or stepped lines, and **in that** the straight lines are arranged parallel to or convergently to one another.

## Revendications

1. Dispositif comportant un arbre (1) et au moins un moyeu (2) monté sur cet arbre, la face (11) d'au moins l'un des bords (10 ; 15) de l'ouverture (5) dans le moyeu (2) en coupe longitudinale verticale présentant un profil courbe et au moins un renfoncement (20) s'étendant axialement étant réalisé dans la paroi de l'ouverture (5) dans le moyeu (2), **caractérisé en ce que** la face courbe (11) d'au moins l'un des bords (10 ; 15) de l'ouverture (5) dans le moyeu (2) se raccorde tangentiellement à la face interne (6) de l'ouverture du moyeu (5), **en ce que** le contour de la paroi (21) du renfoncement (20) a la forme d'un arc de cercle, **en ce que** la paroi (6) de l'ouverture du moyeu (5) a la forme d'une structure géométrique dont la ligne d'enveloppe est une droite, **en ce que** l'arbre (1) présente des rehaussements de matière (16, 26) s'étendant axialement et/ou périphériques, **en ce que** la distance (N ; rp) du sommet de ces rehaussements (16, 26) depuis l'axe longitudinal A de l'arbre (1) est supérieure au rayon (rw) de la région non déformée de l'arbre (1), **en ce que** le rayon (r1) de l'ouverture (5) dans le moyeu (2) est plus petit que la distance au sommet (N ; rp) des rehaussements (16, 26) sur l'arbre (1) et **en ce que** les rehaussements se trouvent au moins dans la région de la longueur de l'arbre qui reçoit le moyeu (2) pressé sur l'arbre (1).

2. Dispositif selon la revendication 1, **caractérisé en ce que** la paroi (21) du renfoncement (20) constitue une portion de l'enveloppe d'un cylindre, **en ce que** le rayon (r2) de ce cylindre est plus petit que le rayon (r1) de l'ouverture du moyeu (5) et **en ce que** l'axe (B) du cylindre (20) s'étend à une distance (e) de l'axe longitudinal (A) de l'ouverture du moyeu (5) et de préférence parallèlement à cet axe longitudinal (A).

3. Dispositif selon la revendication 1, **caractérisé en ce que** l'allure du contour de la région de transition (24) entre la paroi (6) de l'ouverture du moyeu (5) et la paroi (21) du renfoncement (20) présente la forme d'un arc, **en ce que** cet arc (24) est une portion d'un cercle (28) de rayon (r4) et **en ce que** cette portion de cercle (24) peut se prolonger tangentiellement à la fois dans la paroi (6) de l'ouverture de moyeu (5) et dans la paroi (21) du renfoncement (20), ou **en ce que** ladite région de transition (24) présente une allure inconstante, de sorte que cette région de transition (24) soit réalisée comme une arête (22) dans le moyeu (2).

4. Dispositif selon la revendication 1, **caractérisé en ce que** le profil de la paroi (6) du renfoncement (20) est un profil composé, **en ce que** ce profil comprend deux arcs (211, 212) et une portion (213) s'étendant entre ces arcs (211, 212) et en ligne droite, **en ce que** l'arc (211, 212) présente une longueur angulaire de pratiquement seulement 90 degrés, **en ce que** chacun des arcs (211 ou 212) se raccorde tangentiellement à une extrémité à la portion d'arc de cercle voisine (24) et **en ce que** l'extrémité opposée de la portion d'arc de cercle respective (24) se prolonge tangentiellement dans la portion rectiligne (213) du profil du renfoncement (20).

5. Dispositif selon la revendication 1, **caractérisé en ce que** le contour de la paroi (6) de l'ouverture (5) dans le moyeu (2) forme une courbe qui est constituée d'arcs et **en ce qu'**un arc convexe et un arc concave alternent l'un avec l'autre, de sorte que le contour a la forme d'une ligne ondulée.

6. Dispositif selon la revendication 5, **caractérisé en ce que** la paroi du moyeu (6) présente quatre renfoncements (20), **en ce que** deux renfoncements (20) sont à chaque fois diamétralement opposés, **en ce que** le contour ou le profil de la région de transition (24) entre les renfoncements adjacents respectifs (20) a la forme d'un arc, **en ce que** cet arc (24) peut être une portion d'un cercle (28), et **en ce que** les parties d'extrémité du contour des renfoncements adjacents (20) peuvent se prolonger tangentiellement dans les parties d'extrémité de l'arc de cercle respectif (24).

7. Dispositif selon la revendication 1, dans lequel l'arbre (1) présente des rehaussements de matière périphériques (26), **caractérisé en ce que** le rayon (rp) des rehaussements est égal à la distance (M) entre l'axe longitudinal (A) de l'ouverture de moyeu (5) et la position (23) de la paroi (21) du renfoncement la plus éloignée de l'axe longitudinal (A) ou **en ce que** le rayon (rp) est supérieur à cette distance (M).

8. Dispositif selon la revendication 7, **caractérisé en ce que** le moyeu présente une portion (25) avec un profil s'étendant de manière convexe en coupe verticale, **en ce que** ce profil (25) s'étend entre le profil (11) du bord de l'ouverture (10) s'étendant de manière convexe et le renfoncement (20) dans la paroi de l'ouverture (6) et **en ce que** le profil (25) se raccorde tangentiellement d'une part au profil (11) du bord de l'ouverture (10) et d'autre part à la face interne (21) du renfoncement (20).

9. Dispositif selon la revendication 1, dans lequel l'arbre présente des rehaussements (16) s'étendant axialement, **caractérisé en ce que** des creux périphériques (17) sont réalisés dans la paroi interne (6) de l'ouverture du moyeu (5), **en ce que** ces creux pratiquement annulaires sont pratiquement orthogonaux à l'axe longitudinal (A) de l'ouverture du moyeu (5) et sont espacés les uns des autres, **en ce que** la profondeur (f) de ces creux (17) est au moins aussi grande que la hauteur (s) des rehaussements (16) s'étendant axialement et **en ce que** les rehaussements s'étendant axialement sont plus durs que la paroi (6) de l'ouverture du moyeu (5).

10. Dispositif selon la revendication 1, **caractérisé en ce que** la partie de bord (15) de l'ouverture de moyeu (5) présente un profil composé d'au moins deux portions de profil (11, 12) s'étendant de manière courbe, **en ce que** chaque portion (11) de cette partie de bord (15), qui se raccorde à la paroi de l'ouverture (6), s'étend de manière convexe, **en ce que** chaque portion (12) du bord du moyeu (15), qui se raccorde à la face latérale du moyeu (7), s'étend de manière concave et **en ce que** ces portions (11, 12) s'étendant de manière courbe du bord de l'ouverture (15) convergent tangentiellement les unes vers les autres.

11. Dispositif selon la revendication 1, **caractérisé en ce que** le moyeu (2) est fixé à l'une des extrémités de l'arbre (1), **en ce que** la partie d'extrémité de l'arbre (1) portant le moyeu (2) est pourvue d'un épaulement (31), contre lequel le moyeu (2) peut venir buter, **en ce que** la longueur de la portion en retrait (32) de l'arbre (1) est choisie de telle sorte qu'une partie (33) de la portion de l'arbre (32) dépasse de l'ouverture du moyeu (5) et **en ce que** la portion (33) de l'arbre (1) dépassant hors de l'ouverture du moyeu (5) est fixée par nutation ou par matage contre le moyeu (2).

12. Dispositif selon la revendication 1, **caractérisé en ce que** la face interne (6) de l'ouverture du moyeu (5) est réalisée en tant qu'enveloppe d'une structure géométrique, **en ce que** le profil (11) de l'ouverture du moyeu (5) se prolonge à une extrémité dans les lignes d'enveloppe de la face interne (6), **en ce que** les lignes d'enveloppe de ladite structure sont des lignes ou des lignes étagées et **en ce que** les lignes sont disposées parallèlement ou convergent les unes vers les autres.
